(19) **Europäisches Patentamt European Patent Office Office européen des brevets**

(11) **EP 2 020 726 B1**

(12) **FASCICULE DE BREVET EUROPEEN**

(45) Date de publication et mention de la délivrance du brevet:
**30.03.2016 Bulletin 2016/13**

(51) Int Cl.:
***H02J 9/06*** *(2006.01)*      *B60L 1/00* *(2006.01)*
*B60L 3/00* *(2006.01)*      *B60L 9/00* *(2006.01)*

(21) Numéro de dépôt: **08161463.8**

(22) Date de dépôt: **30.07.2008**

(54) **Procédé d'alimentation de charges auxiliaires de secours, convertisseur auxiliaire et véhicule ferroviaire pour ce procédé**

Verfahren zur Einspeisung von Notfall-Hilfsladungen, Hilfswandler und Schienenfahrzeug für dieses Verfahren

Method of powering emergency auxiliary loads, auxiliary converter and railway vehicle for this method

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **03.08.2007 FR 0756933**

(43) Date de publication de la demande:
**04.02.2009 Bulletin 2009/06**

(73) Titulaire: **ALSTOM Transport Technologies 92300 Levallois-Perret (FR)**

(72) Inventeurs:
• **Bousaada, Johnny**
  **B-1330 Rixensart (BE)**
• **Masselus, Jean-Emmanuel**
  **B-6032 Mont-sur-Marchienne (BE)**

(74) Mandataire: **Blot, Philippe Robert Emile Cabinet Lavoix 2, place d'Estienne d'Orves 75441 Paris Cedex 09 (FR)**

(56) Documents cités:
| | |
|---|---|
| CA-C- 2 027 292 | GB-A- 2 405 754 |
| US-A- 5 537 307 | US-A1- 2005 012 395 |
| US-A1- 2007 159 858 | |

• CHUANHONG ZHAO ET AL: "A novel three-phase three-port UPS employing a single high-frequency isolation transformer" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US, vol. 6, 20 juin 2004 (2004-06-20), pages 4135-4141, XP010739066 ISBN: 978-0-7803-8399-9
• MICHON M ET AL: "A three-port bi-directional converter for hybrid fuel cell systems" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US, vol. 6, 20 juin 2004 (2004-06-20), pages 4736-4742, XP010739164 ISBN: 978-0-7803-8399-9

**Description**

La présente invention concerne un procédé d'alimentation de charges auxiliaires de secours, un convertisseur auxiliaire et un véhicule ferroviaire mettant en oeuvre ce procédé.

Un procédé d'alimentation de charges électriques à partir d'un dispositif rechargeable de stockage d'énergie est décrit dans le document US20007/159858 A1 et aussi dans l'article "A novel three-phase three-port UPS employing a single high-frequency isolation transformer" (Chuanhong Zhao; Kolar J W, 2004 IEEE 35th Annual Power Electronics Specialists Conférence, 20-25 June 2004, Aachen, Germany).

Il existe des procédés d'alimentation de charge auxiliaire de secours d'un véhicule ferroviaire à partir d'un dispositif rechargeable de stockage d'énergie électrique embarqué dans le véhicule. Le dispositif de stockage d'énergie est apte à stocker une quantité d'énergie suffisante pour permettre, dans un mode de secours, le fonctionnement des charges auxiliaires de secours pendant plus d'une trentaine de minutes à partir de cette seule source d'énergie, typiquement entre 30 minutes et une heure.

Les procédés existants comportent un mode normal dans lequel un chargeur de batterie alimente les charges auxiliaires basse tension et recharge le dispositif de stockage d'énergie électrique, ce chargeur étant apte à produire une tension continue permettant de recharger le dispositif de stockage d'énergie électrique à partir d'une tension triphasée.

L'invention proposée concerne l'amélioration d'un convertisseur auxiliaire :

- pour alimentation continue depuis une caténaire sous tension continue ou depuis un pont monophasé à commutation forcé (PMCF) dans le cas d'une caténaire sous tension alternative,
- de topologie générale DPI (Direct PWM Inverter), avec transformateur basse fréquence en sortie (typiquement 50 Hz ou 60 Hz),
- avec un chargeur de batterie alimenté par le transformateur basse fréquence et éventuellement également à partir d'une prise de quai 400Vac.

La tension triphasée est obtenue à partir de l'énergie électrique continue captée sur une caténaire via un onduleur ou sur un bus intermédiaire en courant continu alimenté par un pont redresseur monophasé à commutation forcée (PMCF) dans le cas d'une caténaire sous tension alternative.

Le chargeur comporte :

- trois bornes d'entrée raccordées chacune à l'une des phases de la tension triphasée,
- au moins deux bornes de sortie le plus souvent trois dont deux sont raccordées au dispositif de stockage d'énergie électrique, sur lesquelles est délivrée la tension continue redressée.

En effet, généralement, les chargeurs de batterie ont trois bornes de sortie : deux à polarité positive et une à polarité négative, la première borne à polarité positive est raccordée directement à la batterie. La deuxième borne à polarité positive est munie d'une diode antiretour, elle alimente les charges auxiliaires qui doivent être alimentées sous tension continue, permettant ainsi de créer un réseau auxiliaire basse tension alimenté éventuellement par plusieurs batteries et plusieurs chargeurs sur un train, avec la garantie qu'en cas de court-circuit d'une batterie ou d'un chargeur le bus reste alimenté.

Le chargeur comporte également

- un redresseur triphasé dont chacun des trois bras est raccordé en entrée au réseau triphasé et dont la sortie continue est raccordée aux bornes de sortie du chargeur de batterie, le redresseur étant soit un pont à thyristors, soit un pont mixte à thyristor et diodes,
- une unité de pilotage de la commutation des thyristors pour redresser la tension triphasée.

Les charges auxiliaires d'un véhicule ferroviaire sont toutes les charges électriques embarquées dans un véhicule ferroviaire à l'exception des moteurs de propulsion du véhicule ferroviaire. Ces charges auxiliaires sont de deux types :

- des charges triphasées alternatives alimentées en moyenne tension, et
- des charges alimentées en basse tension.

Les charges triphasées alternatives moyenne tension sont alimentées pour des raisons de redondance par plusieurs convertisseurs auxiliaires soit via des réseaux différents (généralement deux), qui peuvent être reliés en cas de panne d'un convertisseur auxiliaire grâce à un contacteur de couplage entre eux soit via un réseau unique, les convertisseurs auxiliaires étant alors synchronisés entre eux. Par moyenne tension, il faut comprendre une tension triphasée comprise entre 350 Vac et 500 Vac. Ces charges auxiliaires moyenne tension sont, par exemple, des climatiseurs, des radiateurs pour chauffer l'intérieur des voitures, des éclairages ou des humidificateurs.

Les charges alimentées en basse tension continue sont alimentées par le réseau basse tension avec la batterie en tampon, les tensions batterie normalisées étant de 24, 48, 72, 96, et 110Vdc. Ces charges auxiliaires basse tension sont par exemple de l'appareillage, des électroniques de contrôle, les services d'information voyageur, toute ou une partie de l'éclairage ...

Par convertisseur auxiliaire, on désigne l'équipement électrique propre à produire la moyenne tension triphasée et la basse tension continue alimentant les charges auxiliaires à partir de l'énergie électrique captée par l'intermédiaire de la caténaire. Généralement, cet équipement est logé à l'intérieur d'une même enceinte.

On désigne également dans ce texte, par « basse tension » une tension continue dont la valeur est inférieure à 150 Vdc.

Par le terme « caténaire » on désigne, aussi bien des fils aériens suspendus au-dessus des voies de chemin de fer et permettant d'alimenter le véhicule ferroviaire, qu'un troisième rail au sol s'étendant le long des voies de chemin de fer et sur lequel frotte un patin, de manière à alimenter le véhicule ferroviaire en énergie électrique.

La fréquence de commutation d'un élément électronique commandable de commutation de puissance est définie comme étant l'inverse du nombre de commutations de cet élément par unité de temps. Cette fréquence de commutation est, typiquement égale à la fréquence de la porteuse d'une modulation de largeur d'impulsions lorsque les instants de commutation sont déterminés par un tel procédé. L'expression « modulation de largeur d'impulsions » est parfois plus connue sous l'acronyme de PWM (Pulse Width Modulation).

Dans les procédés existants, les interrupteurs commandables sont formés de thyristors et un filtre passe bas est raccordé entre les bornes de sortie du chargeur pour lisser la tension continue redressée. Ce filtre comporte typiquement un condensateur et une inductance en série, ce type de filtre est nécessaire car des créneaux de tension sont appliqués par les thyristors à la sortie du redresseur.

Actuellement, ce filtre L-C est encombrant et lourd, et la présence d'harmoniques de redressement impose également des contraintes sur le filtre triphasé du réseau moyenne tension.

Grâce à un redresseur régénératif du type décrit dans l'article IEEE « PWM Regenerative Rectifiers : state of the Art » de J. Rodriguez et al. à la place du redresseur à thyristors, il est possible de supprimer l'inductance du filtre du chargeur ainsi que les harmoniques basse fréquence dues au redressement.

Par ailleurs, certaines charges auxiliaires à alimentation triphasée alternative notamment la ventilation de secours des métros nécessitent l'installation d'onduleurs dédiés raccordables à la batterie, de manière à pouvoir être alimentés en mode de secours, c'est-à-dire en l'absence de tension caténaire, l'onduleur principal alimenté en mode normal par la caténaire n'étant plus alimenté.

Cela constitue une masse et un encombrement important d'équipements et par conséquent un coût de fabrication plus élevé.

Le problème technique est de diminuer la masse et l'encombrement des équipements nécessaires en mode normal et en mode de secours, tout en conservant les performances de filtrage des harmoniques obtenues pour les configurations d'équipements actuelles.

A cet effet l'invention a pour objet un procédé d'alimentation des charges auxiliaires triphasées dans lequel le procédé comprend les étapes consistant en ce que :

- il est fourni dans chaque bras du redresseur deux éléments électroniques commandables de commutation de puissance propres à être ouverts et fermés de manière commandée et à commuter en mode normal le courant circulant dans le bras où ils sont placés,
- en mode normal, une unité de pilotage commande l'allumage et l'extinction des éléments électroniques à des instants déterminés pour redresser la tension triphasée, la fréquence de commutation des éléments électroniques étant supérieure à au moins vingt fois la fréquence fondamentale de la tension triphasée, et
- en mode de secours, c'est-à-dire en l'absence de tension caténaire, l'onduleur principal n'est plus commandé et le chargeur de batterie est commandé comme un onduleur par l'unité de pilotage,
- l'unité de pilotage commande la commutation des éléments électroniques de l'état passant vers l'état non passant et vice versa à des instants déterminés pour produire une tension triphasée sur le réseau auxiliaire permettant le fonctionnement des charges auxiliaires de secours, cette tension triphasée étant produite à partir de l'énergie stockée dans le dispositif de stockage d'énergie électrique.

Dans le procédé ci-dessus, le fait d'utiliser des éléments électroniques commandables notamment des transistors permet de déterminer librement non seulement l'instant d'allumage, mais également l'instant d'extinction. Un transistor offre donc plus de possibilités de commandes qu'un thyristor dont seul l'allumage peut être commandé. Cette possibilité additionnelle est ici mise en oeuvre pour hacher le courant à redresser avec une fréquence de commutation beaucoup plus élevée que la fréquence de la tension triphasée. Le hachage haute fréquence permet d'utiliser l'inductance de fuite du transformateur pour effectuer le lissage du courant et donc de se passer d'inductance de sortie le redresseur se transforme ainsi en source de courant. Les harmoniques de courant ainsi crées peuvent être filtrées par un condensateur placé en sortie du chargeur de batterie.

En outre, du fait que le redresseur est composé de six éléments électroniques commandables de commutation de puissance, il est intrinsèquement réversible, c'est-à-dire qu'il peut être commandé comme un onduleur en l'absence de tension caténaire (mode secours). Il peut alors alimenter certaines charges auxiliaires à alimentation alternative (ventilation de secours) sans avoir recours à un onduleur de secours spécifique et séparé.

Les modes de réalisation de ce procédé peuvent comporter une ou plusieurs des caractéristiques suivantes :

- la fréquence de commutation des éléments électroniques est également au moins vingt fois supérieure à la fréquence fondamentale de la tension triphasée produite ;
- en mode normal, un transformateur triphasé produit une moyenne tension triphasée comprise entre 350 et 500 Vac sur le bus auxiliaire à partir de l'énergie captée sur la caténaire pour alimenter les charges auxiliaires qui sont raccordées à ce bus auxiliaire ;

- la caténaire est à tension continue et en mode normal, un onduleur produit une tension triphasée en entrée du transformateur triphasé à partir de l'énergie captée sur la caténaire,
- la caténaire est à tension alternative et en mode normal un pont redresseur monophasé produit une tension redressée continue en entrée d'un onduleur raccordé en entrée au transformateur triphasé,
- en mode normal, l'unité de pilotage est propre à commander de manière synchrone les interrupteurs commandables des trois bras et de l'onduleur,
- les éléments électroniques commandables de commutation de puissance sont des transistors (de préférence de type IGBT) ou des GTO s (Gate Turn off thyristor),
- en mode normal :

  - l'unité de pilotage établit une grandeur représentative de la puissance active à partir de mesures du courant triphasé et de la tension triphasée,
  - l'unité de pilotage acquiert une consigne de puissance active qui détermine la valeur de la puissance active transférée par le chargeur entre ses bornes d'entrée et de sortie et aussi le sens de transfert de la puissance active entre ses bornes,
  - l'unité de pilotage détermine les instants de commutation des éléments électroniques commandables de commutation de puissance en fonction de la différence entre la consigne de puissance active et la grandeur établie représentative de la puissance active ;

- l'unité de pilotage établit une grandeur représentative de la puissance réactive à partir de mesures du courant triphasé et de la tension triphasée,
- l'unité de pilotage est programmée avec une consigne de puissance réactive qui détermine la valeur de la puissance réactive transférée par le chargeur entre ses bornes d'entrée et de sortie et aussi le sens de transfert de la puissance réactive entre ses bornes,
- l'unité de pilotage détermine les instants de commutation des transistors en fonction de la différence entre la consigne de puissance réactive et la grandeur établie représentative de la puissance réactive ;
- en mode normal, la consigne de puissance réactive est nulle ;
- en mode de secours, l'unité de pilotage régule la tension et la fréquence du réseau à des valeurs prédéterminées inscrites dans une mémoire ;
- avant un basculement du mode normal vers le mode de secours, l'unité de pilotage détermine les instants de commutation des transistors de manière à annuler la différence entre la phase de la tension triphasée mesurée sur le bus auxiliaire et la phase de la tension triphasée entre les bornes d'entrée du chargeur, cette dernière phase étant fonction uniquement des instants de commutation des transistors.

Ces modes de réalisation du procédé d'alimentation présentent en outre les avantages suivants :

- la commande de la commutation des transistors pour produire une tension triphasée permet d'utiliser les mêmes transistors pour charger le dispositif de stockage d'énergie et alimenter les charges auxiliaires de secours, ce qui décroît le coût et l'encombrement des équipements nécessaires pour alimenter les charges auxiliaires de secours,
- utiliser un transformateur triphasé pour produire la moyenne tension qui alimente le bus auxiliaire permet d'utiliser le même bus auxiliaire pour alimenter les charges auxiliaires de secours aussi bien dans le mode normal que dans le mode de secours,

- déterminer les instants de commutation des transistors en fonction de la différence entre la consigne de puissance réactive et la grandeur mesurée représentative de la puissance réactive permet de régler la puissance réactive qui transite des bornes d'entrée vers les bornes de sortie du chargeur,
- imposer une puissance réactive nulle en mode normal permet de limiter les pertes d'énergie,
- déterminer les instants de commutation des transistors en fonction de la différence entre la phase de la tension triphasée sur le bus auxiliaire et la phase de la tension entre les bornes d'entrée du chargeur permet d'assurer une continuité de la phase de la tension triphasée sur le bus auxiliaire lorsque l'on passe du mode normal au mode de secours.
- le mode secours présentant la particularité de générer de la tension à l'entrée de l'onduleur principal, par redressement passif de la tension triphasée au primaire du transformateur, ce phénomène peut être exploité pour

  o Précharger le condensateur du filtre d'entrée de l'onduleur principal à partir de la batterie, en faisant fonctionner le charger de batterie en onduleur (suppression du contacteur et de la résistance de précharge),
  o recréer de la tension caténaire, ce qui pourrait être utilisé comme source d'énergie pour faire avancer le train en l'absence de caténaire,

L'invention a également pour objet un convertisseur auxiliaire, ce convertisseur comportant :

- un onduleur triphasé propre à générer une tension triphasée à partir de l'énergie électrique captée sur une caténaire,
- un transformateur triphasé à trois ensembles primaire, secondaire, et tertiaire d'enroulements, connecté sur la sortie triphasée de l'onduleur par le primaire du transformateur, l'ensemble onduleur / transformateur étant apte, en mode normal, à transformer la tension caténaire en moyenne tension triphasée comprise entre 350 Vac et 500 Vac délivrable au secondaire du transformateur sur un réseau auxiliaire d'alimentation de charges auxiliaires,
- un chargeur, connecté au tertiaire du transformateur et apte, en mode normal, à générer une tension continue redressée à partir de la tension triphasée produite par l'onduleur triphasé, ce chargeur comportant :

  • trois bornes d'entrée raccordées chacune à un enroulement du tertiaire du transformateur,
  • deux bornes de sortie raccordées au dispositif de stockage d'énergie électrique, sur lesquelles est délivrée la tension continue redressée,
  • trois bras raccordés en parallèle entre les deux bornes de sortie, chaque bras comportant deux interrupteurs commandables raccordés en série par l'intermédiaire d'un point milieu, chaque point milieu étant raccordé à une borne d'entrée respective,
  • une unité de pilotage de la commutation des interrupteurs pour redresser la tension triphasée,

- les interrupteurs comportent chacun au moins un élément électronique commandable de commutation de puissance propre à être ouvert, état non passant, et fermé, état passant, de manière commandée et à commuter le courant circulant dans le bras où il est placé, et
- l'unité de pilotage est propre à commander la commutation des éléments électroniques du chargeur de l'état passant vers l'état non passant et de l'état non passant vers l'état passant à des instants déterminés pour redresser la tension triphasée, la fréquence de commutation des éléments électroniques étant supérieure à au moins vingt fois la fréquence fondamentale de la tension triphasée.

Les modes de réalisation de ce convertisseur peuvent comporter une ou plusieurs des caractéristiques suivantes :

- l'unité de pilotage est apte, en mode de secours, à commander la commutation des éléments électroniques de l'état passant vers l'état non passant et vice versa à des instants déterminés pour produire une tension triphasée entre les bornes d'entrée à partir de la tension continue présente entre ses bornes de sortie, la fréquence de commutation des transistors étant au moins vingt fois supérieure à la fréquence de la tension triphasée produite ;
- le chargeur est électriquement isolé de l'onduleur triphasé par l'intermédiaire du transformateur triphasé.

L'invention a également pour objet un véhicule ferroviaire comportant :

- un réseau auxiliaire triphasé,
- au moins une charge auxiliaire de secours dont l'alimentation doit être maintenue pendant plus d'une trentaine de minutes dans un mode de secours, cette charge étant raccordée au réseau auxiliaire,
- un dispositif rechargeable de stockage d'énergie électrique raccordable à chaque charge auxiliaire de secours, ce dispositif étant propre à stocker une quantité d'énergie suffisante pour permettre, en mode de secours, le fonctionnement de toutes les charges auxiliaires de secours pendant plus de dix minutes à partir de cette seule source d'énergie,

- au moins le convertisseur auxiliaire ci-dessus pour alimenter le réseau auxiliaire.

L'invention sera mieux comprise à la lecture de la description qui va suivre, donnée uniquement à titre d'exemple non limitatif et faite en se référant aux dessins sur lesquels :

- la figure 1 est une illustration schématique d'un véhicule ferroviaire équipé d'un chargeur de batterie,
- la figure 2 est une illustration schématique d'une unité de pilotage du chargeur de batterie de la figure 1,
- la figure 3. est un organigramme d'un procédé d'alimentation de charges auxiliaires de secours dans le véhicule de la figure 1,
- la figure 4 est un graphe représentant un certain nombre de vecteurs utilisés dans le procédé de la figure 3,
- la figure 5 est une illustration schématique d'un modèle du chargeur de batterie du véhicule ferroviaire de la figure 1 utilisé pour simuler le procédé de la figure 3,
- les figures 6, 10 et 14 sont des chronogrammes illustrant l'allure de la forme d'onde d'une phase du courant triphasée produite par le chargeur de batterie,
- les figures 7 et 11 sont des graphes représentant le spectre du courant représenté, respectivement, sur les figures 6 et 10,
- les figures 8, 12 et 15 sont des chronogrammes représentant l'évolution de la tension continue redressée par le chargeur de batterie pour différentes fréquences de commutation, et
- les figures 9 et 13 sont des graphes illustrant le spectre des tensions illustrées, respectivement, sur les figures 8 et 12.

Dans ces figures, les mêmes références sont utilisées pour désigner les mêmes éléments.

Dans la suite de cette description, les caractéristiques et fonctions bien connues de l'homme du métier ne sont pas décrites en détail.

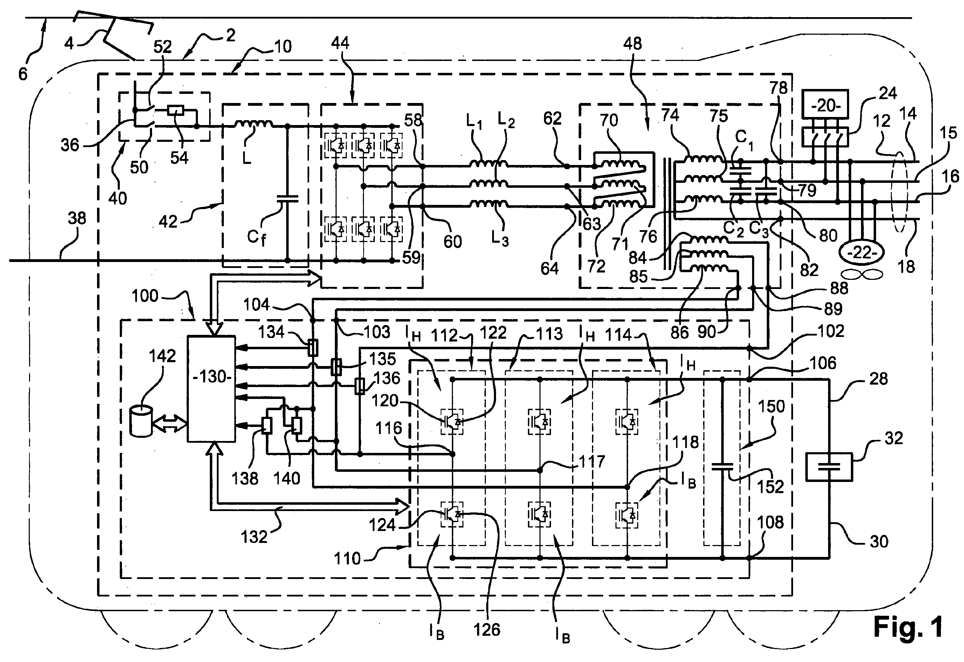

La figure 1 représente un véhicule ferroviaire 2 alimenté en électricité par l'intermédiaire d'un pantographe 4 qui frotte sur une caténaire 6 d'alimentation. La caténaire 6 est alimentée en haute tension, c'est-à-dire typiquement une tension continue d'une valeur nominale supérieure ou égale à à 600 Vdc. Par exemple ici, la tension d'alimentation de la caténaire 6 est égale à 1500Vdc.

Le véhicule 2 est, par exemple, un métro équipé d'une ventilation de secours, un train ou un tramway.

Le véhicule 2 comprend un convertisseur auxiliaire 10 propre à alimenter en moyenne tension triphasée un réseau auxiliaire 12. La tension triphasée sur le bus 12 est égale à 400 Vac.

Le réseau auxiliaire 12 comprend trois conducteurs de phases 14 à 16 et un conducteur de neutre 18.

Typiquement, le réseau auxiliaire 12 s'étend dans plusieurs voitures du véhicule 2.

En variante, le véhicule 2 comprend au moins deux convertisseurs auxiliaires et généralement au moins deux bus à 400 Vac.

L'ensemble des charges auxiliaires embarquées dans ce véhicule 2 sont raccordées au bus 12. Les charges basse tension continue ici ne sont pas représentées.

Les charges auxiliaires sont réparties en deux groupes, un groupe de charges auxiliaires simples et un groupe de charges auxiliaires de secours. Les charges auxiliaires simples sont celles qui doivent être alimentées en mode normal et qui ne doivent pas être alimentées en mode de secours. Le mode normal est ici défini comme étant le mode de fonctionnement dans lequel les charges auxiliaires simples sont alimentées à partir de l'énergie captée par l'intermédiaire du pantographe 4. Les charges auxiliaires de secours sont également alimentées par l'intermédiaire du bus 12 à partir de l'énergie captée par l'intermédiaire du pantographe 4 en mode normal.

On définit le mode de secours comme étant le mode de fonctionnement dans lequel seules les charges auxiliaires de secours sont alimentées. Dans le mode de secours, ces charges sont uniquement alimentées à partir d'un dispositif de stockage d'énergie électrique embarqué dans le véhicule 2.

Typiquement, le mode de secours correspond à un mode de fonctionnement du véhicule 2 suite à une interruption de l'alimentation du véhicule 2 à partir de la caténaire 6. Une telle interruption de l'alimentation peut être d'origine accidentelle ou être provoquée.

Pour simplifier la figure 1, seule une charge auxiliaire simple 20 et une charge auxiliaire 22 de secours ont été représentées.

La charge 20 est, par exemple, la climatisation d'une voiture. La charge 20 est raccordée au réseau auxiliaire 12 par l'intermédiaire d'un contacteur commandable 24. Le contacteur 24 est apte à isoler électriquement la charge 20 du bus 12 en mode de secours.

La charge 22 est raccordée, sans passer par l'intermédiaire de contacteurs, au réseau 12 de sorte qu'elle est alimentée aussi bien en mode normal qu'en mode de secours. La charge 22 est, par exemple, un ventilateur destiné à faire circuler de l'air dans l'une des voitures du véhicule 2 alimentée en moyenne tension.

**EP 2 020 726 B1**

Le convertisseur 10 est ici également apte à alimenter en basse tension un bus continu formé de deux conducteurs 28 et 30 isolés électriquement l'un de l'autre. Ici, la basse tension est typiquement égale à 110 Vdc.

Un dispositif rechargeable 32 de stockage d'énergie électrique est électriquement raccordé entre les conducteurs 28 et 30. Le dispositif rechargeable 32 de stockage d'énergie comprend deux bornes de sortie.

Le dispositif 32 est apte à stocker suffisamment d'énergie pour permettre d'alimenter à lui tout seul les charges auxiliaires de secours pendant plus d'une trentaine de minutes. Par exemple, ici, le dispositif 32 est une batterie.

Le convertisseur 10 est raccordé par l'intermédiaire de conducteurs 36 et 38 isolés électriquement l'un de l'autre.

Le convertisseur 10 comprend, logé dans une seule et même enceinte métallique, raccordés les uns après les autres et dans l'ordre qui suit, les éléments suivants :

- un circuit 40 d'isolation et de précharge,
- un filtre 42,
- un onduleur 44,
- un filtre de sortie sinusoïdal constitué d'un ensemble de trois inductances triphasées L1, L2, L3 et, d'un ensemble de condensateurs C1 ,C2,C3
- un transformateur 48.

Le circuit 40 comprend un interrupteur ou contacteur 50 raccordé en série avec le conducteur 36 de manière à pouvoir isoler le convertisseur lorsque l'interrupteur 50 est ouvert et, en alternance, à raccorder le convertisseur à son alimentation lorsque l'interrupteur 50 est fermé.

En variante dans le cas d'une caténaire alternative, le convertisseur 10 est raccordé par l'intermédiaire des conducteurs 36 et 38 à un pont monophasé à commutation forcée (PMCF) alimenté par la caténaire via un transformateur.

Le circuit 40 comprend également, raccordé en parallèle à l'interrupteur 50, un interrupteur commandable ou contacteur 52 raccordé en série avec une résistance 54 de précharge. Les circuits de précharge sont connus et le circuit 40 ne sera donc pas décrit ici plus en détail.

Le filtre 42 est un filtre LC comportant une inductance L raccordée en série sur le conducteur 36 et un condensateur $C_f$ raccordé entre le conducteur 36 et le conducteur 38.

L'onduleur 44 est apte à transformer la tension continue filtrée par le filtre 42 en une tension triphasée de fréquence $f_T$. Typiquement, la fréquence $f_T$ est comprise entre 45 Hz et 65 Hz. Ici, la fréquence $f_T$ est égale à 50 Hz. Chacune des phases de la tension triphasée produite est délivrée par une borne respective 58 à 60.

Le filtre de sortie sinusoïdal permet de filtrer la tension triphasée produite par l'onduleur 44 sur les bornes 58 à 60. Par exemple, le filtre de sortie sinusoïdal est formé de trois inductances $L_1$, $L_2$ et $L_3$ raccordées par une extrémité, respectivement, aux bornes 58 à 60 et par l'autre extrémité à des bornes respectives 62 à 64 de sortie du filtre 46. En pratique, les inductances L1, L2, L3 sont intégrées sous forme d'inductances de fuite du transformateur.

Les bornes 62, 63 et 64 sont raccordées à une extrémité respective de trois enroulements primaires 70 à 72 du transformateur 48. Les enroulements primaires 70 à 72 sont raccordés en triangle et forment un ensemble d'enroulements primaire.

Ces enroulements primaires 70 à 72 sont raccordés par couplage électromagnétique à trois enroulements secondaires 74 à 76 formant un ensemble d'enroulements secondaire raccordés en étoile. Les extrémités des enroulements 74 à 76 qui ne sont pas raccordées au point milieu de l'étoile sont raccordées, respectivement, aux bornes 78 et 80 de sortie de la moyenne tension triphasée. Le point milieu du raccordement en étoile des enroulements secondaires est raccordé à une borne de sortie 82.

Les condensateurs $C_1$, $C_2$ et $C_3$ sont raccordés respectivement entre les bornes 78 et 79, 79 et 80, et 78 et 80.

Le rapport du nombre de spires entre les enroulements primaires et secondaires est choisi de manière à délivrer une moyenne tension triphasée sur les bornes 78 à 80. Les bornes 78 à 80 et la borne 82 sont, respectivement, raccordées aux conducteurs 14 à 16 et 18. Le transformateur 48 permet donc d'alimenter en moyenne tension le réseau auxiliaire 12.

Le transformateur 48 comprend également trois enroulements tertiaires 84 à 86 couplés électromagnétiquement aux enroulements primaires 70 à 72 et aux enroulements secondaires 74 à 76 et formant un ensemble d'enroulements tertiaire. Une extrémité des enroulements tertiaires est raccordée à un point milieu de manière à former un raccordement en étoile. L'autre extrémité de ces enroulements tertiaires est raccordée à des bornes de sortie, respectivement, 88 à 90.

Le convertisseur 2 comprend également un chargeur 100 de batterie. Ce chargeur 100 comprend trois bornes d'entrée 102 à 104 raccordées, respectivement, aux bornes 88 à 90.

Le chargeur 100 comprend également deux bornes 106 et 108, respectivement associées aux bornes du dispositif de recharge 32 électriquement raccordées aux conducteurs 28 et 30.

En variante, des charges auxiliaires non représentées peuvent être également raccordées sur la sortie du chargeur de batterie et en parallèle de celle-ci.

Le courant de charge de la batterie 32 est également mesuré au moyen d'un capteur de courant.

Ici, le chargeur 100 est réversible, c'est-à-dire qu'il est capable de transférer de l'énergie électrique des bornes d'entrée 102 à 104 vers les bornes de sortie 106 et 108 pour recharger le dispositif 32 mais également dans le sens inverse de manière à pouvoir alimenter les charges auxiliaires de secours à partir du dispositif 32.

Le chargeur 100 comprend à cet effet, un redresseur réversible 110 comportant trois bras 112 à 114 raccordés en parallèle entre les bornes 106 et 108. Chaque bras comprend deux interrupteurs commandables $I_H$ et $I_B$ raccordés en série par l'intermédiaire d'un point milieu. Les points milieux des branches 112 à 114 portent, respectivement, les références 116 à 118. Les points milieux 116 à 118 sont, respectivement, raccordés aux bornes 102 à 104.

Les interrupteurs $I_H$ et $I_B$ sont des interrupteurs bidirectionnels en courant lorsqu'ils sont fermés et unidirectionnels en courant lorsqu'ils sont ouverts.

Chaque interrupteur $I_B$ comprend :

- un transistor de puissance 120 dont le collecteur est électriquement raccordé à la borne 106 et l'émetteur au point milieu, et
- une diode 122 raccordée en parallèle entre le collecteur et l'émetteur dont la cathode est raccordée à la borne 106 et l'anode au même point milieu.

Chaque transistor $I_H$ comporte :

- un transistor de puissance 124 dont le collecteur est raccordé au point milieu et dont l'émetteur est raccordé à la borne 108, et
- une diode 126 raccordée en parallèle entre le collecteur et l'émetteur du transistor 124, la cathode de la diode 126 étant raccordée au même point milieu tandis que l'anode est raccordée à la borne 108.

Pour simplifier la figure 1, les références 120, 122, 124 et 126 ont été indiquées une seule fois pour les interrupteurs $I_H$ et $I_B$ du bras 112.

Par transistor de puissance, on désigne des transistors capables de commuter des courants de plus de 50A. Par exemple, les transistors 120 et 124 sont des transistors IGBT (Insulated Gate Bipolar Transistor).

Chacun de ces transistors 120, 124 est apte à commuter d'un état non passant à un état passant et vice versa, en réponse à une commande reçue sur sa grille.

A cet effet, les grilles de chacun de ces transistors sont raccordées à une unité de pilotage 130 du redresseur 110 par l'intermédiaire de liaisons électriques schématisées par une double flèche 132.

L'unité de pilotage 130 ou unité centrale est apte à commander le redresseur 110 ainsi que de manière synchrone l'onduleur 44. L'unité de pilotage 130 permet que le redresseur 110 fonctionne en tant que redresseur en mode normal et, en alternance, fonctionne en tant qu'onduleur en mode de secours. A cet effet, l'unité centrale 130 est raccordée à des capteurs de courant 134 à 136 propres à mesurer l'intensité des courants $I_R$, $I_S$, $I_T$ circulant, respectivement, par l'intermédiaire des bornes 104 à 102. L'unité 130 est également raccordée à deux capteurs 138, 140, respectivement, des tensions $V_{RT}$ et $V_{RS}$. Les tensions $V_{RT}$ et $V_{RS}$ sont les tensions, respectivement, entre les bornes 104 et 102 et 104 et 103.

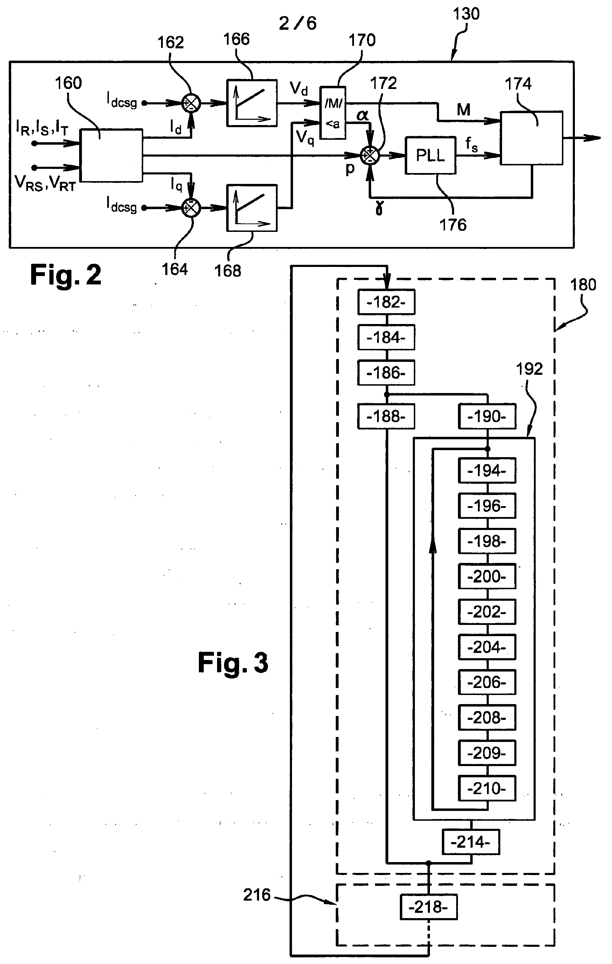

L'unité 130 est décrite plus en détail en regard de la figure 2.

L'unité 130 est raccordée à une mémoire 142 contenant les valeurs, en mode normal , pour des consignes $I_{dcsg}$ de puissance active et $I_{qcsg}$ de puissance réactive. En mode normal, la valeur de la consigne $I_{dcsg}$ est négative. Par exemple, il en est aussi de même pour la valeur de la consigne $I_{qcsg}$.

En mode de secours, il n'y a pas de régulation de puissance active et réactive. En mode secours, l'unité 130 régule la tension et la fréquence du bus 12 à des valeurs prédéterminées inscrites dans la mémoire 142 (par exemple : 250V et 35 Hz). Le rôle de ces consignes apparaîtra plus clairement à la lecture de la suite de cette description.

Le chargeur 100 comprend également un condensateur 150 raccordé entre les bornes 106 et 108.. La capacité de ce condensateur 152 est inférieure à 50 mF. Plus précisément, la capacité de ce condensateur 150 est choisie pour que l'ondulation de tension à ses bornes soit de l'ordre de 1%.

La figure 2 représente plus en détail l'unité 130. Cette unité 130 comprend un démodulateur 160 propre à établir l'intensité du courant actif $I_d$ et l'intensité du courant réactif $I_q$, à partir des mesures des courants $I_R$, $I_S$ et $I_T$ réalisés par les capteurs 134 à 136 et des tensions $V_{RS}$ et $V_{RT}$ réalisées par les capteurs 138 et 140 dans le cas du fonctionnement en mode normal.

On rappelle ici que la puissance active PA est définie par la relation suivante :

$$PA = IU \cos \varphi \qquad\qquad (1)$$

où :

- I et la valeur efficace du courant triphasé,
- U est la valeur efficace de la tension triphasée, et
- φ est la valeur du déphasage entre le courant et la tension triphasée.

De façon similaire, on définit la puissance réactive PR par la relation suivante :

$$PR = IU \sin \varphi \qquad (2)$$

Les courants actif $I_d$ et réactif $I_q$ sont, respectivement, égaux à Icos φ Isin φ.

Dans le véhicule 2, la valeur efficace U est sensiblement constante, de sorte que les intensités des courants $I_d$ et $I_q$ peuvent être considérées comme étant représentatives à elles seules, respectivement, de la puissance active et de la puissance réactive.

Le démodulateur 160 envoie les valeurs des courants $I_d$ et $I_q$ à une entrée négative, respectivement, de soustracteurs 162 et 164. Une entrée positive du soustracteur 162 est conçue pour recevoir la valeur de la consigne $I_{dcsg}$. Une sortie du soustracteur 162 est raccordée à un régulateur 166 pour transmette à ce dernier la différence entre la consigne $I_{dcsg}$ et l'intensité mesurée du courant $I_d$. Le régulateur 166 est apte à calculer à partir de cette différence l'abscisse $V_d$ d'un vecteur U $\alpha\beta_{csg}$ de tension à générer.

L'entrée positive du soustracteur 164 est conçu pour recevoir la valeur de la consigne $I_{qcsg}$ enregistrée dans la mémoire 142. Une sortie du soustracteur 164 délivre à un régulateur 168 la différence entre la valeur de la consigne $I_{qcsg}$ et l'intensité mesurée du courant $I_q$. A partir de cette différence, le régulateur 168 est apte à calculer l'ordonnée Vq du vecteur $U_{\alpha\beta csg}$ de tension à générer.

Le démodulateur 160 est également apte à délivrer un angle p correspondant à l'angle entre un vecteur $U_{\alpha\beta m}$ et l'axe $\alpha$ d'un repère $\alpha\beta$.

L'unité 130 comprend un bloc 170 de conversion propre à calculer le module M et l'angle $\alpha$ du vecteur $U_{\alpha\beta csg}$ à partir des abscisses et ordonnées $V_d$ et Vq.

Un soustracteur 172 permet de calculer la différence $\varepsilon$ entre l'angle p et un angle $\gamma$ délivré par un modulateur 174 de largeur d'impulsions.

Le soustracteur 172 est apte à délivrer à une boucle 176 à verrouillage de phases (plus connue sous l'acronyme de PLL (Phase Locked Loop)) la différence $\varepsilon$ à laquelle a été ajoutée la valeur de l'angle $\alpha$. A partir de la somme de l'angle $\alpha$ et de la différencie $\varepsilon$, la boucle 176 est capable de générer une consigne $f_s$ de fréquence.

Le modulateur 174 est apte à partir du module M et de la fréquence $f_s$ à déterminer les instants auxquels doivent être commutés les différents transistors et à commander la commutation de ces transistors aux instants déterminés. A cet effet, par exemple, le modulateur 174 utilise les intersections d'une porteuse avec une modulante. La fréquence de la porteuse fixe la fréquence de commutation des transistors.

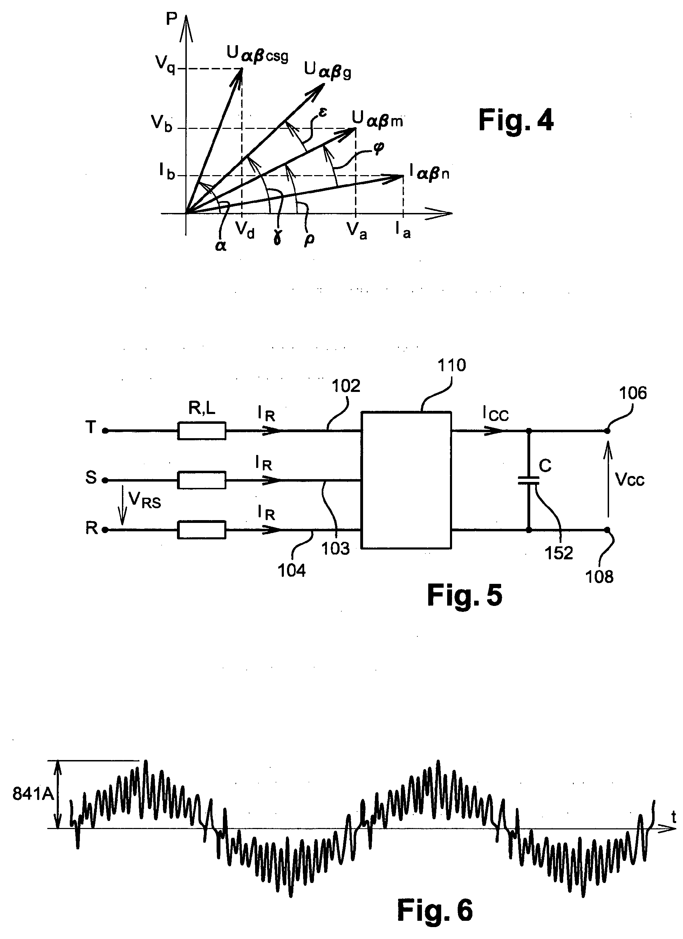

Le fonctionnement du véhicule 2 va maintenant être décrit plus en détail en regard du procédé de la figure 3 et à l'aide du graphe de la figure 4.

Initialement, on suppose que le véhicule 2 fonctionne en mode normal lors d'une phase 180. Lors de cette phase 180, le véhicule 2 est alimenté par l'intermédiaire du pantographe 4 et de la caténaire 6. L'interrupteur 50 est dans l'état passant tandis que l'interrupteur 52 servant uniquement pour précharger le filtre d'entrée, une fois le filtre chargé, est commandé ouvert. Initialement, lors d'une étape 182, les charges auxiliaires simples sont électriquement raccordées au bus 12 de manière à pouvoir être alimentées à partir de celui-ci.

Ensuite, lors d'une étape 184, l'onduleur 44 produit sur les bornes 58 à 60 une tension triphasée à partir de la tension continue présente entre les conducteurs 36 et 38.

Lors d'une étape 186, le transformateur 48 transforme la tension triphasée produite par l'onduleur 44 en une moyenne tension triphasée délivrée sur le bus auxiliaire 12.

Lors d'une étape 188, les différentes charges auxiliaires raccordées au bus 12 sont donc alimentées à partir de l'énergie captée par le pantographe 4. Ainsi, les charges 20 et 22 sont alimentées et fonctionnent.

En parallèle, lors d'une étape 190, le transformateur 48 délivre également de la tension triphasée sur les bornes d'entrée 102 à 104 du chargeur 100.

Lors d'une étape 192, à partir de la tension triphasée présente sur des bornes d'entrée 102 à 104, le chargeur 100 recharge le dispositif 32. A cet effet, le chargeur 100 redresse la tension triphasée présente sur les bornes 102 à 104 afin de produire une tension continue redressée entre des bornes 106 et 108, ce qui permet de recharger le dispositif 32.

Plus précisément, lors d'une opération 194, les capteurs 134 à 136, 138 et 140 mesurent les tensions $V_{RS}$, $V_{RT}$ et les intensités des courants $I_R$, $I_S$ et $I_T$.

Ensuite, lors d'une opération 196, les valeurs des consignes $I_{dcsg}$ et $I_{qcsg}$ correspondant au mode normal de fonctionnement sont calculées par le régulateur 130 de manière à respecter une loi de charge de la batterie. Ces valeurs sont négatives, ce qui correspond à un transfert d'énergie par l'intermédiaire du redresseur réversible 110 allant des bornes d'entrée 102 à 104 vers les bornes de sortie 106 et 108. Ici, la consigne $I_{qcsg}$ est nulle pour ne pas consommer de la puissance réactive.

Lors d'une opération 198, le démodulateur 160 détermine à partir des mesures réalisées lors de l'étape 194, les coordonnées $V_a$ et $V_b$ d'un vecteur $U_{\alpha\beta m}$ de tension dans le repère $\alpha\beta$. A cet effet, la transformée de Concordia est utilisée. Les coordonnées $V_a$ et $V_b$ sont ici déterminées à partir des relations suivantes :

$$\begin{cases} V_a = \dfrac{V_{RS} + V_{RT}}{3} \\[2mm] V_b = \dfrac{V_{RS} - V_{RT}}{\sqrt{3}} \end{cases} \tag{3}$$

Ce vecteur $U_{\alpha\beta m}$ est représenté dans le repère $\alpha\beta$ de la figure 4. Ce vecteur $U_{\alpha\beta m}$ fait un angle p avec l'axe $\alpha$.
Sur la figure 4, on a également représenté un vecteur $I_{\alpha\beta m}$, correspondant au courant triphasé mesuré exprimé dans le repère $\alpha\beta$. Les coordonnées de ce vecteur $I_{\alpha\beta m}$ sont respectivement notées $I_a$ et $I_b$. Ces coordonnées sont, par exemple, calculées une nouvelle fois à l'aide de la transformée de Concordia. Par exemple, les coordonnées $I_a$ et $I_b$ sont déterminées à l'aide de la relation suivante :

$$\begin{cases} I_a = \dfrac{2 \cdot I_R + I_S + I_T}{3} \\[2mm] I_b = \dfrac{I_T - I_S}{\sqrt{3}} \end{cases} \tag{4}$$

Par exemple, la valeur de l''angle p est établie à partir des coordonnées $V_a$ et $V_b$.
Ensuite, toujours lors de l'opération 198, le démodulateur 160 établit le courant actif $I_d$ mesuré et le courant réactif $I_q$ mesuré à l'aide des relations suivantes :

$$\begin{cases} I_d = I_a \cdot \sin(\rho) + I_b \cdot \cos(\rho) \\ I_q = I_a \cdot \cos(\rho) - I_b \cdot \sin(\rho) \end{cases} \tag{5}$$

Ensuite, lors d'une opération 200, les soustracteurs 162 et 164 calculent les différences $\Delta I_d$ et $\Delta I_q$ à l'aide des relations suivantes :

$$\Delta I_d = I_{dcsg} - I_d \tag{6}$$

$$\Delta I_q = I_{qcsg} - I_q \tag{7}$$

Ensuite, les coordonnées $V_d$ et Vq du vecteur $U_{\alpha\beta csg}$ de consigne de tension permettant d'annuler les différences $\Delta I_d$ et $\Delta I_q$ sont calculées. A cet effet, lors d'une opération 202, le régulateur 166 calcule à partir de la différence $\Delta I_d$ la coordonnée $V_d$ du vecteur $U_{\alpha\beta csg}$. Le régulateur 166 est, par exemple, un régulateur PI (Proportionnel Integral) de manière à stabiliser la régulation de la puissance active. Par exemple, la valeur de la coordonnée $V_d$ est calculée à l'aide de la relation suivante :

$$V_d = K_{pd} \cdot \Delta I_d + \int K_{id} \cdot \Delta I_d \tag{8}$$

où :

- $K_{pd}$ et $K_{id}$ sont les constantes proportionnelle et intégrale du régulateur PI.

De façon similaire, lors d'une opération 204, le régulateur 168 calcule la valeur de la coordonnée Vq à partir de la différence $\Delta I_q$. Lors de l'opération 204, la coordonnée Vq est, par exemple, calculée à l'aide de la relation suivante :

$$V_q = K_{pq} \cdot \Delta I_q + \int K_{iq} \cdot \Delta I_q \qquad (9)$$

Les constantes $K_{pq}$ et $K_{iq}$ de la relation (9) n'ont pas nécessairement les mêmes valeurs que celles de la relation (8), $K_{pd}$ et $K_{id}$.

Lors d'une opération 206, le module 170 calcule l'angle $\alpha$ et le module M du vecteur $U_{\alpha\beta csg}$ dans le repère $\alpha\beta$ à partir des coordonnées $V_d$ et $V_q$.

Le module M est transmis directement au modulateur 174 tandis que l'angle $\alpha$ est transmis au soustracteur 172.

Lors d'une opération 208, le soustracteur 172 calcule la différence $\varepsilon$ à l'aide de la relation suivante :

$$\varepsilon = \rho - \gamma \qquad (10)$$

où $\gamma$ est l'angle d'une tension triphasée $U_{\alpha\beta g}$ correspondant aux instants de commutation déterminés par le modulateur 174 par rapport à l'axe $\alpha$ du repère $\alpha\beta$.

L'angle $\gamma$ est une donnée numérique produite par le modulateur 174.

$\varepsilon$ représente la différence entre la phase mesurée de la tension triphasée et la phase de la tension triphasée produite ou absorbée par le redresseurr 110 au même instant.

Pour que le redresseur 110 soit synchronisé sur la tension triphasée mesurée, cette différence $\varepsilon$ doit être nulle.

Le soustracteur 172 additionne également à cette différence $\varepsilon$ la valeur de l'angle $\alpha$ délivrée par le module 170. Le résultat de cette addition est transmis à la boucle 176 qui calcule, lors d'une opération 209, la fréquence $f_s$ qui permet en même temps d'annuler la différence $\varepsilon$ et d'atteindre les consignes $I_{dcsg}$ et $I_{qcsg}$ de puissance actives et réactives imposées. Par exemple, la boucle 176 calcule la fréquence $f_s$ à l'aide de la relation suivante :

$$f_s = k_{pPLL} \cdot e_{kPLL} + \int k_{iPLL} \cdot e_{kPLL} \qquad (11)$$

où :

- $e_{kPLL} = \alpha + \varepsilon$,
- $k_{pPLL}$ et $k_{iPLL}$ sont les constantes proportionnelle et intégrale de la régulation PI de la boucle 176.

Ensuite, lors d'une opération 210, le modulateur 174 détermine les instants de commutation des transistors 120 et 124 de manière à produire une tension triphasée de fréquence $f_s$ et dont la valeur efficace est égale au module M. Le modulateur 174 commande également les commutations des transistors 120 et 124 aux instants déterminés.

Les opérations 194 et 210 sont réitérées en permanence de sorte que la batterie 32 est rechargée à l'aide d'un courant continu issu du redressement du courant alternatif.

L'ensemble des transistors 120 à 124 continue à commuter dans une étape 214 en assurant un courant nul dans la batterie et l'alimentation de toutes les charges auxiliaires connectées en parallèle sur la batterie.

Si, suite à un incident d'exploitation, la caténaire 6 n'est plus alimentée en haute tension, alors le convertisseur 10 arrête de fonctionner en mode normal. Il est mis fin à la phase 180 et l'on bascule à une phase 216 de fonctionnement en mode de secours.

La phase 216 est identique à la phase 180 à l'exception du fait que l'étape 182 est remplacée par une étape 218 et les étapes 184 et 214 sont omises. Lors de l'étape 218, les charges auxiliaires simples sont déconnectées du bus auxiliaire 12. Par exemple, lors de l'étape 218, le contacteur 24 est ouvert de manière à isoler électriquement la charge 20 du réseau auxiliaire 12. Par contre, l'ensemble des charges auxiliaires de secours reste raccordé électriquement au bus 12. Lors de l'étape 218, les interrupteurs 50 et 52 sont également ouverts.

Pour simplifier la figure 3, les étapes 186 à 192 qui sont exécutées après l'étape 218 ont été représentées par une ligne en pointillés.

Lors de l'étape 192, le transfert d'énergie ne s'effectue plus des bornes 102 à 104 vers les bornes 106 à 108, mais en sens inverse, ce qui permet d'alimenter le bus 12 à partir de l'énergie stockée dans le dispositif 32. Ainsi, lors de l'étape 186, la charge 22 est alimentée à partir du dispositif 32 et par l'intermédiaire du couplage électromagnétique entre les enroulements secondaires et tertiaires de sorte que celle-ci continue à fonctionner même si le véhicule 2 n'est plus alimenté par l'intermédiaire de la caténaire 6.

La figure 5 représente un modèle de la partie de puissance du chargeur 100. Sur ce modèle, le bloc R, L correspond à une résistance et une inductance raccordées en série. Cette inductance et cette résistance sont incorporées dans les enroulements tertiaires 84 à 86 du transformateur 48 et n'ont donc pas été représentées sur la figure 1.

Les figures 6 à 15 représentent des résultats de simulations obtenus à l'aide du modèle de la figure 5. Les simulations ont été réalisées avec les valeurs numériques suivantes :

- $V_{Rs}$=45 Vac,
- la fréquence du réseau alternatif est de 50 Hz,
- la valeur efficace du courant triphasé est de 321,68 A,
- l'inductance L est égale à 15 mH,
- la résistance R est égale à 236 m$\Omega$,
- la capacité de sortie C du chargeur est de 1.1 mF
- la tension continue $V_{cc}$ entre les bornes 106 et 108 est égale à 120 Vdc,
- le courant continu $I_{cc}$ de charge du dispositif 32 est égal à 208,33 A,
- la puissance électrique délivrée entre les bornes 106 et 108 est égale à 25 kW,
- le déphasage φ entre le courant triphasé et la tension triphasée est pris égal à 0.

Les figures 6 à 9 ont été obtenues lorsque la fréquence de la porteuse de la modulation de largeur d'implusions mise en oeuvre par le modulateur 174 est égale à 1050 Hz.

La figure 6 représente l'évolution en fonction du temps du courant traversant l'une des bornes d'entrée 102 à 104 lorsque l'on recharge le dispositif 32. L'intensité crête maximale est égale à 841 A.

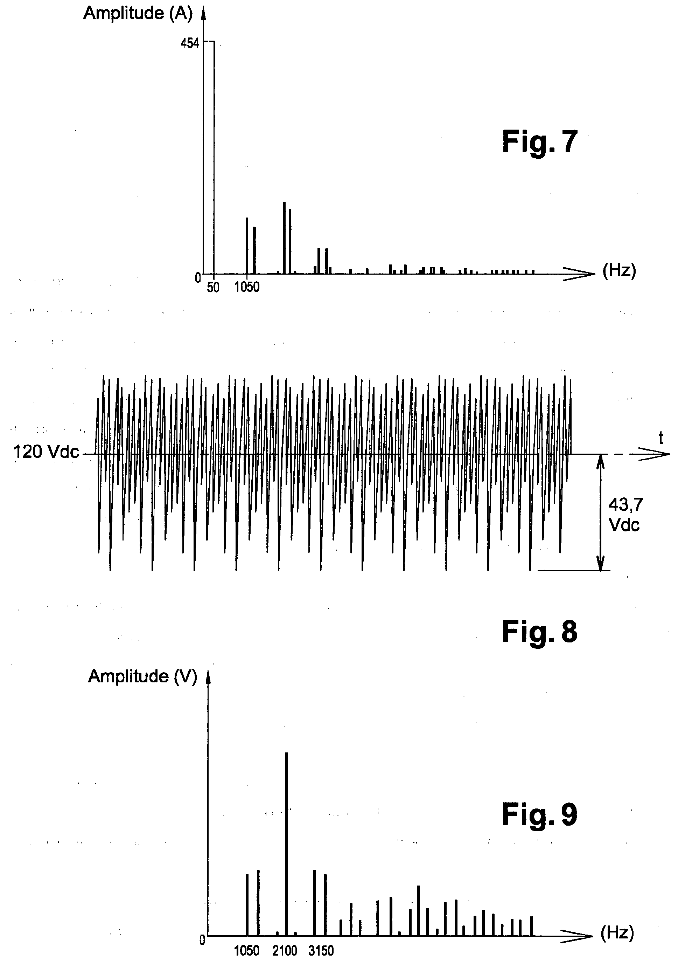

La figure 7 représente le spectre de la courbe représentée sur la figure 6. On peut observer que la fréquence fondamentale de cette phase est égale à 50 Hz. L'harmonique de la fréquence fondamentale la plus proche est aux environs immédiats de 1050 Hz (la fréquence de commutation). De plus, l'amplitude du fondamental est au moins quatre fois supérieure à l'amplitude de la première harmonique. Ici, l'amplitude du fondamental est de de 454 A.

La figure 8 représente l'évolution en fonction du temps de la tension de sortie du chargeur 100 lorsque l'on recharge le dispositif 32. L'amplitude crête maximale est de 43,7 Vdc, ce qui représente un taux d'ondulation inférieur à 37%.

La figure 9 représente le spectre de la tension de sortie du chargeur représentée sur la figure 8 qui comprend une composante continue. La première harmonique significative de 50 Hz est rejetée au-delà de 1050 Hz. L'amplitude de la composante continue non représentée sur la figure 9 est également supérieure à au moins quatre fois l'amplitude de la première harmonique.

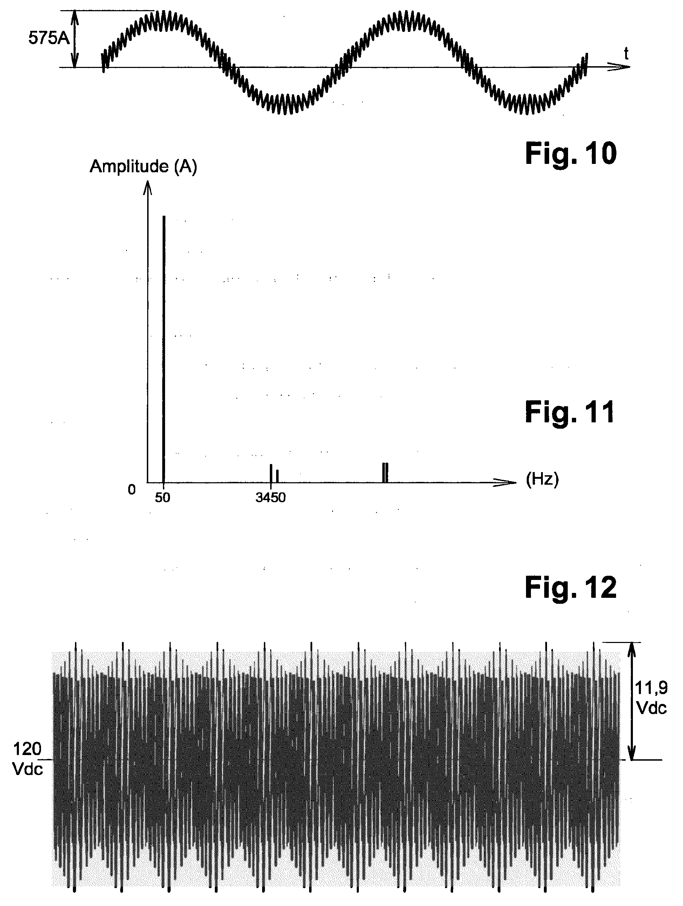

Toute chose égale par ailleurs, les figures 10 à 13 ont été obtenues lorsque la fréquence de la porteuse de la modulation de largeur d'impulsions est égale à 3450 Hz.

La figure 10 représente l'évolution en fonction du temps de l'intensité du courant traversant l'une des bornes 102 à 104. L'intensité crête maximale est égale à 575 A.

La figure 11 représente le spectre du courant représenté sur la figure 10. L'échelle utilisée pour la figure 11 est la même que celle utilisée pour la figure 7. Sur la figure 11, le fondamental est situé à 50 Hz. La première harmonique est située au-delà de 3450 Hz. L'amplitude du fondamental est au moins dix fois supérieure à l'amplitude de la première harmonique.

La figure 12 représente la tension continue redressée produite par le chargeur 100 lorsqu'on charge le dispositif 32. La plus grande amplitude crête est ici de 11,9 Vdc, ce qui représente un taux d'ondulation inférieur à 10%.

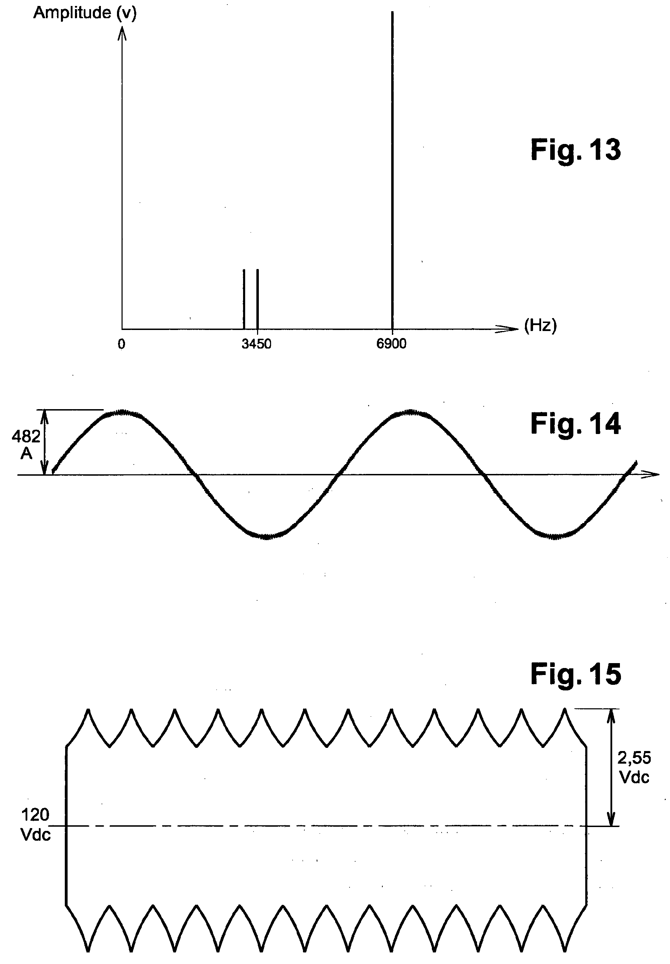

La figure 13 représente le spectre de la tension continue redressée de la figure 12 qui comprend une composante continue située à 0 Hz et non représentée. La première harmonique significative de 50 Hz est repoussée à plus de 3450 Hz du fondamental. De plus, l'amplitude de la composante continue est au moins cinq fois supérieure à l'amplitude de la première harmonique.

Toute chose égale par ailleurs, les figures 14 et 15 ont été obtenues avec une fréquence de 15150 Hz pour la porteuse de la modulation de largeur d'impulsions. La figure 14 représente l'intensité du courant traversant l'une des bornes 102 à 104.L'intensité crête maximale est de 484,2 A.

Dans le spectre du courant de la phase de la figure 14, la première harmonique est repoussée à plus de 15150 Hz de la fréquence du fondamental.

La figure 15 représente l'enveloppe extérieure des variations de la tension continue redressée produite par le chargeur 100 lorsqu'il charge le dispositif 32. L'amplitude crête maximale est égale à 2,55 Vdc, ce qui correspond à un taux d'ondulation inférieur à 3 %.

Dans le spectre de la tension continue redressée, la première harmonique est repoussée à plus de 15150 Hz du fondamental. Comme on peut le constater, plus la fréquence de la porteuse de la modulation de largeur d'impulsions est élevée, c'est-à-dire plus la fréquence de commutation est élevée, plus la première harmonique est rejetée loin du fondamental. Ainsi, plus la fréquence de commutation augmente, plus la valeur de l'inductance de dispersion du transformateur et la capacité du condensateur 152 peuvent être réduites, ce qui se traduit par une diminution de l'encombrement de ces composants et en particulier du filtre 150.

De nombreux autres modes de réalisation sont possibles.

Par exemple, le chargeur 100 peut être raccordé aux conducteurs 14, 15 et 16 par l'intermédiaire d'un transformateur triphasé indépendant du transformateur 48. Dans ce cas là, les enroulements tertiaires du transformateur 48 peuvent être omis.

La commande du chargeur de batterie 110 décrite ici est une commande vectorielle. Toutefois, en variante, une commande scalaire peut être utilisée en lieu et place de la commande vectorielle à partir du moment où la fréquence de commutation des transistors reste au moins vingt fois supérieure à la fréquence fondamentale de la tension triphasée.

Sur la figure 1, seul un convertisseur auxiliaire a été représenté dans le véhicule 2. Toutefois, en pratique, les véhicules ferroviaires comportent au moins un second convertisseur auxiliaire identique, par exemple, au convertisseur 10.

En variante, les charges auxiliaires de secours sont alimentées par l'intermédiaire d'un bus continu basse tension raccordé aux bornes du dispositif 32 et non pas par l'intermédiaire du bus auxiliaire triphasé 12.

En variante, le banc de condensateur C1,C2,C3 peut être décomposé en deux parties avec une partie qui s'élimine afin de pouvoir fournir la puissance réactive en fonctionnement normal et à compenser le courant magnétisant du transformateur en mode secours.

En variante, la précharge du condensateur peut être effectuée à partir de la batterie (suppression du dispositif de précharge 52,54).

Enfin, si l'on cherche uniquement à alimenter des charges auxiliaires de secours par l'intermédiaire du même dispositif que celui utilisé pour charger le dispositif 32, alors il n'est pas nécessaire que la fréquence de commutation soit supérieure à au moins vingt fois la fréquence fondamentale de la tension triphasée. Dans ce dernier cas, l'encombrement et la masse du filtre 150 ne sont pas nécessairement diminués mais, par contre, on conserve l'avantage d'avoir un seul et même redresseur réversible pour échanger de l'énergie électrique dans les deux sens entre les charges auxiliaires et le dispositif 32.

**Revendications**

1. Procédé d'alimentation de charges auxiliaires (22) de secours d'un véhicule ferroviaire à partir d'un dispositif rechargeable (32) de stockage d'énergie électrique embarqué dans le véhicule ferroviaire et apte à stocker une quantité d'énergie suffisante pour permettre, dans un mode de secours, le fonctionnement des charges auxiliaires de secours pendant plus d'une trentaine de minutes à partir de cette seule source d'énergie, ce procédé comportant un mode normal (180) dans lequel un chargeur (100) recharge le dispositif (32) de stockage d'énergie électrique, ce chargeur (100) étant apte à produire une tension continue redressée permettant de recharger le dispositif (32) de stockage d'énergie électrique à partir d'une tension triphasée de mode normal obtenue à partir de l'énergie électrique captée sur une caténaire (4), ce chargeur comportant :

   • trois bornes d'entrée (102-104) raccordées chacune à l'une des phases de la tension triphasée,
   • deux bornes de sortie (106, 108) raccordées au dispositif de stockage d'énergie électrique, sur lesquelles est délivrée la tension continue redressée,
   • trois bras (112-114) raccordés en parallèle entre les deux bornes de sortie, chaque bras comportant deux interrupteurs commandables ($I_H$, $I_B$) raccordés en série par l'intermédiaire d'un point milieu (116-118), chaque point milieu étant raccordé à une borne d'entrée respective,
   • une unité (130) de pilotage de la commutation des interrupteurs pour redresser la tension triphasée,

   **caractérisé en ce que** le procédé comprend les étapes consistant **en ce que** :

   - il est fourni dans chaque interrupteur un élément électronique (120, 124) commandable de commutation de puissance propre à être ouvert, état non passant, et fermé, état passant, de manière commandée et propre à commuter le courant circulant dans le bras où il est placé,
   - en mode normal, l'unité de pilotage (130) commande (210) la commutation des éléments électroniques commandables de commutation de puissance (120, 124) de l'état passant vers l'état non passant et vice versa à des instants déterminés librement pour redresser la tension triphasée, la fréquence de commutation des éléments électroniques commandables de puissance (120, 124) étant supérieure à au moins vingt fois la fréquence fondamentale de la tension triphasée, et

- en mode de secours, les charges auxiliaires (22) de secours à alimentation alternative sont raccordées aux bornes d'entrée du chargeur par l'intermédiaire d'un réseau auxiliaire moyenne tension triphasé (12), et
- l'unité de pilotage (130) commande (210) la commutation des éléments électroniques de l'état passant vers l'état non passant et vice versa à des instants déterminés librement pour produire une tension triphasée auxiliaire sur le réseau auxiliaire (12) permettant le fonctionnement des charges auxiliaires de secours (22), cette tension triphasée auxiliaire étant produite à partir de l'énergie stockée dans le dispositif de stockage d'énergie électrique.

2. Procédé selon la revendication 1, dans lequel, en mode de secours, la fréquence de commutation des éléments électroniques est également au moins vingt fois supérieure à la fréquence fondamentale de la tension triphasée produite.

3. Procédé selon la revendication 1 ou 2, dans lequel, en mode normal, un transformateur triphasé (48) produit une moyenne tension triphasée comprise entre 350 et 500 Vac sur le réseau auxiliaire (12) à partir de l'énergie captée sur la caténaire pour alimenter les charges auxiliaires (20, 22) qui sont raccordées à ce réseau auxiliaire (12).

4. Procédé selon la revendication 3, dans lequel la caténaire (4) est sous tension continue et dans lequel en mode normal, un onduleur (44) produit une tension triphasée en entrée du transformateur triphasé (48) à partir de l'énergie captée sur la caténaire.

5. Procédé selon la revendication 3, dans lequel la caténaire (4) est sous tension alternative et dans lequel en mode normal un pont redresseur monophasé produit une tension redressée continue en entrée d'un onduleur (44) raccordé en entrée au transformateur triphasé (48).

6. Procédé selon la revendication 4 ou 5, dans lequel en mode normal, l'unité (130) de pilotage est propre à commander de manière synchrone les interrupteurs commandables des trois bras (112-114) et l'onduleur (44).

7. Procédé selon l'une quelconque des revendications 1 à 6 dans lequel les éléments électroniques de puissance sont des transistors notamment de type IGBT ou des GTO s.

8. Procédé selon l'une quelconque des revendications précédentes, dans lequel, en mode normal :

   - l'unité de pilotage établit (198) une grandeur ($I_d$) représentative de la puissance active à partir de mesures du courant triphasé et de la tension triphasée effectuées en entrée du chargeur,
   - l'unité de pilotage est programmée (196) avec une consigne de puissance active qui détermine la valeur de la puissance active transférée par le chargeur entre ses bornes d'entrée et de sortie et aussi le sens de transfert de la puissance active entre ses bornes,
   - l'unité de pilotage détermine (210) les instants de commutation des éléments électriques commandables de commutation de puissance en fonction de la différence entre la consigne de puissance active et la grandeur établie représentative de la puissance active.

9. Procédé selon l'une quelconque des revendications précédentes, dans lequel, en mode normal :

   - l'unité de pilotage établit (198) une grandeur ($I_q$) représentative de la puissance réactive à partir de mesures du courant triphasé et de la tension triphasée,
   - l'unité de pilotage acquiert (196) une consigne de puissance réactive qui détermine la valeur de la puissance réactive transférée par le chargeur entre ses bornes d'entrée et de sortie et aussi le sens de transfert de la puissance réactive entre ses bornes,
   - l'unité de pilotage détermine (210) les instants de commutation des transistors en fonction de la différence entre la consigne de puissance réactive et la grandeur établie représentative de la puissance réactive.

10. Procédé selon la revendication 9, dans lequel, en mode normal, la consigne de puissance réactive est nulle.

11. Procédé selon l'une quelconque des revendications 1 à 10, dans lequel un mode de secours, l'unité de pilotage (130) régule la tension et la fréquence du bus (12) à des valeurs prédéterminées inscrits dans une mémoire (142).

12. Procédé selon l'une quelconque des revendications précédentes, dans lequel avant un basculement du mode normal vers le mode de secours, l'unité de pilotage détermine (209) les instants de commutation des éléments électroniques de manière à annuler la différence entre la phase de la tension triphasée mesurée sur le réseau auxiliaire et la phase de la tension triphasée entre les bornes d'entrée du chargeur, cette dernière phase étant fonction uniquement des instants de commutation des éléments électroniques.

13. Convertisseur auxiliaire apte à être mis en oeuvre dans un véhicule ferroviaire, ce convertisseur auxiliaire comportant :

- un onduleur triphasé (44) propre à générer une tension triphasée à partir de l'énergie électrique captée sur une caténaire sous une tension,
- un transformateur triphasé (48) à trois ensembles primaire, secondaire et tertiaire d'enroulements connecté sur la sortie triphasée de l'onduleur (44) par l'ensemble d'enroulements primaire (70-72), l'ensemble onduleur (44)/transformateur (48) apte, en mode normal, à transformer la tension caténaire en une moyenne tension triphasée comprise entre 350 Vac et 500 Vac délivrable au secondaire (74-76) du transformateur sur un réseau auxiliaire (12) d'alimentation de charges auxiliaires,
- un chargeur (100) connecté à l'ensemble d'enroulements tertiaire (84-86) du transformateur (48) apte, en mode normal, à générer une tension continue redressée à partir de la tension triphasée produite par l'onduleur triphasé (46), ce chargeur comportant :

 • trois bornes d'entrée (102-104) raccordées chacune à un enroulement de tertiaire (84-86) du transformateur (148),
 • deux bornes de sortie (106, 108) raccordables à un dispositif de stockage d'énergie électrique (32), sur lesquelles est délivrée la tension continue redressée,
 • trois bras (112-114) raccordés en parallèle entre les deux bornes de sortie, chaque bras comportant deux interrupteurs commandables ($I_H$, $I_B$) raccordés en série par l'intermédiaire d'un point milieu (116-118), chaque point milieu étant raccordé à une borne d'entrée respective,
 • une unité (130) de pilotage de la commutation des interrupteurs pour redresser la tension triphasée,

**caractérisé en ce que** :

- les interrupteurs ($I_H$, $I_B$) comportent chacun au moins un élément électronique commandable de commutation de puissance (120, 124) propre à être ouvert, état non passant, et fermé, état passant, de manière commandée et propre à commuter le courant circulant dans le bras où il est placé en commutant d'un état passant vers un état non passant et vice versa, et
- l'unité (130) de pilotage est propre en mode normal à commander la commutation des éléments électroniques commandables de commutation de puissance (120, 124) du chargeur de l'état passant vers l'état non passant et de l'état non passant vers l'état passant à des instants déterminés pour redresser la tension triphasée, la fréquence de commutation des éléments électroniques étant supérieure à au moins vingt fois la fréquence fondamentale de la tension triphasée, et
- l'unité (130) de pilotage est apte, en mode de secours, à commander la commutation des éléments électroniques commandables de commutation de puissance (120, 124) de l'état passant vers l'état non passant et vice versa à des instants déterminés pour produire une tension triphasée entre les bornes d'entrée (102-104) à partir d'une tension continue présente entre ses bornes de sortie (106, 108).

14. Convertisseur auxiliaire selon la revendication 13, **caractérisé en ce que**, en mode secours, la fréquence de commutation des éléments électroniques commandables de commutation de puissance (120, 124) est au moins vingt fois supérieure à la fréquence de la tension triphasée produite.

15. Convertisseur selon la revendication 13 ou 14, dans lequel le chargeur (100) est électriquement isolé de l'onduleur triphasé (44) par l'intermédiaire d'un enroulement primaire (70-72) du transformateur triphasé (48) lorsqu'il est utilisé lors de l'alimentation du réseau auxiliaire en mode normal.

16. convertisseur selon l'une quelconque des revendications 13 à 15, dans lequel les éléments électroniques de puissance commandables sont des transistors notamment de type IGBT ou des GTO.

17. Véhicule ferroviaire alimenté par l'intermédiaire d'une caténaire, ce véhicule comportant :

- un réseau (12) auxiliaire triphasé,

- au moins une charge auxiliaire (22) de secours dont l'alimentation doit être maintenue pendant plus d'une trentaine de minutes dans un mode de secours, cette charge étant raccordée au réseau auxiliaire (12),
- un dispositif rechargeable (32) de stockage d'énergie électrique raccordable à chaque charge auxiliaire de secours (22), ce dispositif étant propre à stocker une quantité d'énergie suffisante pour permettre, en mode de secours, le fonctionnement de toutes les charges auxiliaires de secours pendant plus d'une trentaine de minutes à partir de cette seule source d'énergie,
- au moins un convertisseur auxiliaire pour alimenter le réseau auxiliaire,

**caractérisé en ce que** le convertisseur auxiliaire (10) est conforme à l'une quelconque des revendications 13 à 16.

**Patentansprüche**

1. Verfahren zur Energieversorgung von Notfall-Hilfslasten (22) eines Schienenfahrzeugs ausgehend von einer wiederaufladbaren elektrischen Energiespeichervorrichtung (32), die an Bord des Schienenfahrzeugs ist und geeignet ist, eine Energiemenge zu speichern, die dazu ausreicht, in einem Notfallmodus die Funktion der Notfall-Hilfslasten während ungefähr 30 Minuten ausgehend von dieser einzigen Energiequelle zu ermöglichen, wobei das Verfahren einen normalen Modus (180) aufweist, in dem ein Lader (100) die elektrische Energiespeichervorrichtung (32) wieder auflädt, wobei der Lader (100) geeignet ist, eine gleich gerichtete Gleichspannung zu erzeugen, die es ermöglicht, die elektrische Energiespeichervorrichtung (32) ausgehend von einer Normalmodus-Dreiphasenspannung wieder aufzuladen, die ausgehend von einer von einer Oberleitung (4) entnommenen elektrischen Energie erhalten wird, wobei der Lader aufweist:

   • drei Eingangsanschlüsse (102-104), die jeweils mit einer der Phasen der Dreiphasenspannung verbunden sind,
   • zwei Ausgangsanschlüsse (106,108), die mit der elektrischen Energiespeichervorrichtung verbunden sind, über die die gleich gerichtete Gleichspannung geliefert wird,
   • drei Zweige (112-114), die parallel zwischen die beiden Ausgangsanschlüsse geschaltet sind, wobei jeder Zweig zwei steuerbare Schalter ($I_H$, $I_B$) aufweist, die seriell über einen mittleren Knoten (116-118) verbunden sind, wobei jeder mittlere Knoten mit einem jeweiligen Eingangsanschluss verbunden ist,
   • eine Einheit (130) zum Steuern des Schaltens der Schalter zum Gleichrichten der Dreiphasenspannung, dadurch charakterisiert, dass das Verfahren die Schritte aufweist bestehend aus:

   - es wird in jedem Schalter ein elektronisches, steuerbares Spannungsschaltelement (120,124) bereitgestellt, das auf steuerbare Art dazu geeignet ist, offen zu sein, nicht leitender Zustand, und geschlossen zu sein, leitender Zustand, und dazu geeignet ist, den Strom, der in dem Zweig fließt, in dem es platziert ist, zu schalten,
   - im normalen Modus steuert (210) die Steuereinheit (130) das Schalten der elektronischen, steuerbaren Spannungsschaltelemente (120,124) von dem leitenden Zustand in den nicht leitenden Zustand und umgekehrt zu frei bestimmten Zeitpunkten zum Gleichrichten der Dreiphasenspannung, wobei die Schaltfrequenz der elektronischen, steuerbaren Spannungsschaltelemente (120,124) größer ist als mindestens 20 mal die Fundamentalfrequenz der Dreiphasenspannung und
   - im Hilfsmodus werden die Notfall-Hilfslasten (22) mit alternativer Versorgung mit den Eingangsanschlüssen des Laders über ein Mitteldreiphasenspannungs-Hilfsnetzwerk (12) verbunden und
   - die Steuereinheit (130) steuert (210) das Schalten der elektronischen Elemente von dem leitenden Zustand in den nicht leitenden Zustand und umgekehrt zu frei bestimmten Zeitpunkten zum Erzeugen einer Hilfs-Dreiphasenspannung auf dem Hilfsnetzwerk (12), die die Funktion der Notfall-Hilfslasten (22) ermöglicht, wobei die Hilfs-Dreiphasenspannung ausgehend von der in der elektrischen Energiespeichervorrichtung gespeicherten Energie erzeugt wird.

2. Verfahren gemäß Anspruch 1, in dem, in dem Notfallmodus, die Schaltfrequenz der elektronischen Elemente gleich mindestens 20 mal der Fundamentalfrequenz der erzeugten Dreiphasenspannung ist.

3. Verfahren gemäß Anspruch 1 oder 2, in dem, im normalen Modus, ein drei Phasentransformator (48) eine Mitteldreiphasenspannung, die zwischen 350 und 500Vac liegt, auf dem Hilfsnetzwerk (12) ausgehend von der von der Oberleitung aufgenommenen Energie zum Versorgen der Hilfslasten (20,22), die mit dem Hilfsnetzwerk (12) verbunden sind, erzeugt.

4. Verfahren gemäß Anspruch 3, in dem die Oberleitung (4) unter Gleichspannung steht und in dem im normalen Modus ein Wechselrichter (44) eine Dreiphasenspannung am Eingang des Dreiphasentransformators (48) ausgehend von der von der Oberleitung aufgenommenen Energie erzeugt.

5. Verfahren gemäß Anspruch 3, in dem die Oberleitung (4) unter Wechselspannung steht und in dem im normalen Modus eine Monophasen-Gleichrichterbrücke am Eingang eines Wechselrichters (44), der am Eingang mit dem Dreiphasentransformator (48) verbunden ist, eine gleichgerichtete Gleichspannung erzeugt.

6. Verfahren gemäß Anspruch 4 oder 5, in dem im normalen Modus die Steuereinheit (130) geeignet ist, die steuerbaren Schalter der drei Zweige (112-114) und den Wechselrichter (44) auf synchrone Art zu steuern.

7. Verfahren gemäß einem der Ansprüche 1 bis 6, in dem die elektronischen Spannungselemente Transistoren, insbesondere vom Typ IGBT oder GTOs sind.

8. Verfahren gemäß einem der vorhergehenden Ansprüche, in dem, im normalen Modus:

   - die Steuereinheit eine Größe ($I_d$), die repräsentativ für die aktive Spannung ist, ausgehend von Messungen des Dreiphasenstroms und der Dreiphasenspannung, die am Eingang des Laders bewirkt werden, erstellt,
   - die Steuereinheit mit einem Sollwert für die aktive Spannung programmiert ist (196), die den Wert der aktiven Spannung bestimmt, die von dem Lader zwischen seinen Eingangsanschlüssen und seinen Ausgangsanschlüssen übertragen wird, und auch den Übertragungssinn der aktiven Spannung zwischen seinen Anschlüssen bestimmt,
   - die Steuereinheit (210) die Zeitpunkte des Schaltens der elektronischen, steuerbaren Spannungsschaltelemente in Abhängigkeit des Unterschieds zwischen dem Sollwert für die aktive Spannung und der Größe, die repräsentativ für die aktive Spannung ist, ermittelt.

9. Verfahren gemäß einem der vorhergehenden Ansprüche, indem, im normalen Modus:

   - die Steuereinheit eine Grüße (Iq), die repräsentativ für die reaktive Spannung ist, ausgehend von Messungen des Dreiphasenstroms und der Dreiphasenspannung erstellt,
   - die Steuereinheit (196) einen Sollwert für die reaktive Spannung, die den Wert der reaktiven Spannung bestimmt, die von dem Lader zwischen seinen Eingangsanschlüssen und seinen Ausgangsanschlüssen übertragen wird, und auch den Übertragungssinn der aktiven Spannung zwischen seinen Anschlüssen bestimmt, beschafft,
   - die Steuereinheit (210) die Zeitpunkte des Schaltens der elektronischen, steuerbaren Spannungsschaltelemente in Abhängigkeit des Unterschieds zwischen dem Sollwert für die reaktive Spannung und der Größe, die repräsentativ für die reaktive Spannung ist, ermittelt.

10. Verfahren gemäß Anspruch 9, in dem, im normalen Modus, der Sollwert für die reaktive Spannung Null ist.

11. Verfahren gemäß einem der Ansprüche 1 bis 10, in dem im Notfallmodus die Steuereinheit (130) die Spannung und die Frequenz des Busses (12) mit vorgegebenen, in einen Speicher (142) geschriebenen Werten regelt.

12. Verfahren gemäß einem der vorhergehenden Ansprüche, in dem vor einem Umschalten vom normalen Modus in den Notfallmodus die Schalteinheit die Zeitpunkte des Schaltens der elektronischen Elemente in der Art ermittelt (209), dass der Unterschied zwischen der Phase der auf dem Hilfsnetzwerk gemessenen Dreiphasenspannung und die Phase der Dreiphasenspannung zwischen den Eingangsanschlüssen des Laders aufgehoben wird, wobei diese letzte Phase eine eindeutige Funktion der Schaltzeitpunkte der elektronischen Elemente ist.

13. Hilfswandler, geeignet zum Einsatz in einem Schienenfahrzeug, wobei der Hilfswandler aufweist:

   - einen Dreiphasenwechselrichter (44), der geeignet ist, ausgehend von von einer Oberleitung, die unter einer Spannung steht, aufgenommenen Energie eine Dreiphasenspannung zu erzeugen,
   - einen Dreiphasentransformator (48) mit einer Primärwicklungsanordnung, einer Sekundärwicklungsanordnung und eine Tertiärwicklungsanordnung, der mittels der Primärwicklungsanordnung (70-72) mit dem Dreiphasenausgang des Wechselrichters (44) verbunden ist, wobei die Anordnung Wechselrichter (44)/Transformator (48) geeignet ist, im normalen Modus die Oberleitungsspannung in eine Mitteldreiphasenspannung umzuwandeln, die zwischen 350 Vac und 500 Vac liegt und die an der Sekundärseite (74-76) des Transformators über ein Hilfsnetzwerk (12) zur Versorgung der Hilfslasten geliefert werden kann,

- einen Lader (100), der mit der Tertiärwicklungsanordnung (84-86) des Transformators (48) verbunden ist, der geeignet ist, im normalen Modus eine gleichgerichtete Gleichspannung ausgehend von der von dem Dreiphasenwechselrichter (46) erzeugten Dreiphasenspannung zu erzeugen, wobei der Lader aufweist:

• drei Eingangsanschlüsse (102-104), die jeweils mit einer Tertiärwicklung (84-86) des Transformators (148) verbunden sind,
• zwei Ausgangsanschlüsse (106,108), die mit der elektrischen Energiespeichervorrichtung verbindbar sind, über die die gleich gerichtete Gleichspannung geliefert wird,
• drei Zweige (112-114), die parallel zwischen die beiden Ausgangsanschlüsse geschaltet sind, wobei jeder Zweig zwei steuerbare Schalter ($I_H$, $I_B$) aufweist, die seriell über einen mittleren Knoten (116-118) verbunden sind, wobei jeder mittlere Knoten mit einem jeweiligen Eingangsanschluss verbunden ist,
• eine Einheit (130) zum Steuern des Schaltens der Schalter zum Gleichrichten der Dreiphasenspannung, dadurch charakterisiert, dass:

- die Schalter ($I_H$, $I_B$) jeweils ein elektronisches, steuerbares Spannungsschaltelement (120,124) aufweisen, das auf steuerbare Art dazu geeignet ist, offen zu sein, nicht leitender Zustand, und geschlossen zu sein, leitender Zustand, und dazu geeignet ist, den Strom, der in dem Zweig fließt, in dem es platziert ist, durch Schalten von einem leitenden Zustand in einen nicht leitenden Zustand und umgekehrt zu schalten, und
- die Steuereinheit (130) geeignet ist, im normalen Modus das Schalten der elektronischen, steuerbaren Spannungsschaltelemente (120,124) des Laders von dem leitenden Zustand in den nicht leitenden Zustand und von dem nicht leitenden Zustand in den leitenden Zustand zu bestimmten Zeitpunkten zum Gleichrichten der Dreiphasenspannung zu steuern, wobei die Schaltfrequenz der elektronischen, steuerbaren Spannungsschaltelemente größer ist als mindestens 20 mal die Fundamentalfrequenz der Dreiphasenspannung und
- die Steuereinheit (130) geeignet ist, im Notfallmodus das Schalten der elektronischen, steuerbaren Spannungsschaltelemente (120,124) von dem leitenden Zustand in den nicht leitenden Zustand und umgekehrt zu frei bestimmten Zeitpunkten zum Erzeugen einer Dreiphasenspannung zwischen den Eingangsanschlüssen (102-104) ausgehend von einer Gleichspannung, die zwischen den Ausgangsanschlüssen (106,108) vorliegt, zu steuern.

14. Hilfswandler gemäß Anspruch 13, dadurch charakterisiert, dass im Notfallmodus die Schaltfrequenz der elektronischen Elemente (120, 124) mindestens 20 mal höher ist als die Fundamentalfrequenz der erzeugten Dreiphasenspannung.

15. Wandler gemäß Anspruch 13 oder 14, in dem der Lader (100) mittels einer Primärwicklung (70-72) des Dreiphasentransformator (48) elektrisch von dem Dreiphasenwechselrichter (44) isoliert ist, wenn er bei der Versorgung des Hilfsnetzwerks im normalen Modus verwendet wird.

16. Wandler gemäß einem der Ansprüche 13 bis 15, in dem die elektronischen, steuerbaren Spannungsschaltelemente Transistoren, insbesondere vom Typ IGBT oder GTOs sind.

17. Schienenfahrzeug, versorgt mittels einer Oberleitung, wobei das Fahrzeug aufweist:

- ein Dreiphasenhilfsnetz (12);
- mindestens einen Notfalls-Hilfslast (22), deren Versorgung während ungefähr 30 Minuten in einem Notfallmodus aufrechterhalten werden muss, wobei die Last mit dem Hilfsnetz (12) verbunden ist,
- eine elektrische Energiespeichervorrichtung (32), die mit jeder Notfalls-Hilfslast (22) verbunden werden kann, wobei die Vorrichtung geeignet ist, eine Energiemenge zu speichern, die dazu ausreicht, in einem Notfallmodus die Funktion der Notfall-Hilfslasten während ungefähr 30 Minuten ausgehend von dieser einzigen Energiequelle zu ermöglichen,
- mindestens einen Hilfswandler zum Versorgen des Hilfsnetzes,

dadurch charakterisiert, dass der Hilfswandler (10) mit einem der Ansprüche 13-16 konform ist.

**Claims**

1. A method for powering emergency auxiliary loads (22) in a railway vehicle from a rechargeable electrical energy storage device (32) on board the railway vehicle capable of storing a quantity of energy sufficient to allow the emergency auxiliary loads to operate in emergency mode for at least some thirty minutes from that single source of energy, the method comprising a normal mode (180) in which a charger (100) charges the electrical energy storage device (32), this charger (100) being capable of producing a rectified DC voltage through which the electrical energy storage device (32) can be charged from a three-phase voltage in normal mode obtained from electrical power captured from a catenary (4), this charger comprising:

   • three input terminals (102-104) each connected to one of the phases of the three-phase voltage,
   • two output terminals (106, 108) connected to the electrical energy storage device to which the rectified DC voltage is delivered,
   • three arms (112-114) connected in parallel between the two output terminals, each arm comprising two controllable switches ($I_H$, $I_B$) connected in series through a mid-point (116-118), each mid-point being connected to a corresponding input terminal,
   • a unit (130) controlling switching of the switches to rectify the three-phase voltage,

**characterised in that** the method comprises steps in which:

   - a controllable power switching electronic unit (120, 124) which can be opened, in the non-passing state, and closed, in the passing state, in a controlled way to switch the current flowing in the arm in which it is located is provided in each switch,
   - in normal mode the control unit (130) controls (210) the switching of the controllable power switching electronic units (120, 124) from the passing state to the non-passing state and vice versa at freely chosen times to rectify the three-phase voltage, the switching frequency of the controllable power electronic units (120, 124) being higher than at least twenty times the fundamental frequency of the three-phase voltage, and
   - in emergency mode, the AC powered emergency auxiliary loads (22) are connected to the input terminals of the charger through a three-phase medium voltage auxiliary network (12), and
   - the control unit (130) controls (210) switching of the electronic units from the passing state to the non-passing state and vice versa at times which are freely determined to produce an auxiliary three-phase voltage on the auxiliary network (12) enabling the emergency auxiliary loads (22) to operate, this auxiliary three-phase voltage being produced from the energy stored in the electrical energy storage device.

2. A method according to claim 1, in which in emergency mode the switching frequency for the electronic units is also at least twenty times higher than the fundamental frequency of the three-phase voltage produced.

3. A method according to claim 1 or 2, in which in normal mode a three-phase transformer (48) produces a three-phase medium voltage of between 350 and 500 Vac on the auxiliary network (12) from the energy captured from the catenary to power the auxiliary loads (20, 22) connected to that auxiliary system (12).

4. A method according to claim 3, in which the catenary (4) carries a DC voltage and in which in normal mode a DC/AC converter (44) produces a three-phase voltage input to the three-phase transformer (48) from the energy captured from the catenary.

5. A method according to claim 3, in which the catenary (4) carries an AC voltage and in which in normal mode a single phase rectifier bridge produces a rectified DC voltage as an input to a DC/AC converter (44) connected as an input to the three-phase transformer (48).

6. A method according to claim 4 and 5, in which in normal mode the control unit (130) is able to control the controllable switches in the three arms (112-114) and the DC/AC converter (44) in a synchronous manner.

7. A method according to any one of claims 1 to 6 in which the power electronic units are transistors, in particular of the IGBT type or GTOs.

8. A process according to any one of the preceding claims, in which in normal mode:

   - the control unit establishes (198) a parameter ($I_d$) which is representative of the active power from measurements of the three-phase current and the three-phase voltage made at the input to the charger,
   - the control unit is programmed (196) with an active power reference value which determines the value of the active power transferred by the charger between its input and output terminals and also the direction of transfer of the active power between its terminals,

- the control unit determines (210) the switching times for the controllable power switching electrical units according to the difference between the active power reference value and the established parameter representing the active power.

9. A method according to any one of the preceding claims, in which in normal mode:

- the control unit establishes (198) a parameter ($I_q$) representing the reactive power based on measurements of the three-phase current and three-phase voltage,
- the control unit acquires (196) a reactive power reference value which determines the value of the reactive power transferred by the charger between its input and output terminals and also the direction of transfer of the reactive power between its terminals,
- the control unit determines (210) the switching times for the transistors in relation to the difference between the reactive power reference value and the established parameter representing the reactive power.

10. A method according to claim 9, in which in normal mode the reactive power reference value is zero.

11. A method according to any one of claims 1 to 10, in which in emergency mode the control unit (130) regulates the voltage and frequency of the bus (12) to preset values recorded in a memory (142).

12. A method according to any one of the preceding claims, in which before tripping from normal mode to emergency mode the control unit determines (209) the switching times for the electronic units in such a way as to cancel out the difference between the phase of the three-phase voltage measured in the auxiliary network and the phase of the three-phase voltage between the input terminals of the charger, this latter phase depending only on the switching times of the electronic units.

13. An auxiliary converter suitable for use in a railway vehicle, this auxiliary converter comprising:

- a three-phase DC/AC converter (44) for generating a three-phase voltage from the electrical energy captured from a catenary carrying a voltage,
- a three-phase transformer (48) having three primary, secondary and tertiary sets of windings connected to the three-phase output of the converter (44) through the set of primary windings (70-72), the converter (44)/transformer (48) assembly being able in normal mode to transform the catenary voltage into a three-phase medium voltage of between 350 Vac and 500 Vac which can be delivered to the secondary (74-76) of the transformer in an auxiliary system (12) to power auxiliary loads,
- a charger (100) connected to the set of tertiary windings (84-86) of the transformer (48) able in normal mode to generate a rectified DC voltage from the three-phase voltage produced by the three-phase converter (46), this charger comprising:

    • three input terminals (102-104) each connected to a tertiary winding (84-86) of the transformer (148),
    • two output terminals (106, 108) which can be connected to an electrical energy storage device (32), to which the rectified DC voltage is delivered,
    • three arms (112-114) connected in parallel between the two output terminals, each arm comprising two controllable switches ($I_H$, $I_B$) connected in series through a mid-point (116-118), each mid-point being connected to one input terminal respectively,
    • a control unit (130) for switching the switches to rectify the three-phase voltage,

**characterised in that**:

- the switches ($I_H$, $I_B$) each have at least one controllable power switching electronic unit (120, 124) which can be opened, in the non-passing state, and closed, in the passing state, in a controlled way so as to switch the current passing in the arm in which it is located by switching from a passing state to a non-passing state and vice versa, and
- the control unit (130) is able in normal mode to control the switching of the controllable power switching electronic units (120, 124) of the charger from the passing state to the non-passing state and from the non-passing state to the passing state at particular times to rectify the three-phase voltage, the switching frequency of the electronic units being higher than at least twenty times the fundamental frequency of the three-phase voltage, and
- the control unit (130) is able in emergency mode to control the switching of the controllable power switching electronic units (120 124) from the passing state to the non-passing state and vice versa at particular times to produce a three-phase voltage between the input terminals (102-104) from a DC voltage present between its output terminals (106, 108).

14. An auxiliary converter according to claim 13, **characterised in that** in emergency mode the switching frequency of the controllable power switching electronic units (120, 124) is at least twenty times higher than the frequency of the three-phase voltage produced.

15. A converter according to claim 13 or 14, in which the charger (100) is electrically isolated from the three-phase DC/AC converter (44) through a primary winding (70-72) of the three-phase transformer (48) when it is used to power the auxiliary system in normal mode.

16. A converter according to any one of claims 13 to 15, in which the controllable power electronic units are transistors, in particular of the IGBT type or GTOs.

17. A railway vehicle powered via a catenary, the vehicle comprising:

- a three-phase auxiliary network (12),
- at least one emergency auxiliary load (22) which has to be kept powered for at least some thirty minutes in emergency mode, this load being connected to the auxiliary network (12),
- a rechargeable electrical energy storage device (32) which can be connected to each emergency auxiliary load (22), this device being able to store a quantity of energy sufficient to allow all the emergency auxiliary loads to operate in emergency mode for more than some thirty minutes from this single source of energy,
- at least one auxiliary converter to power the auxiliary system, **characterised in that** the auxiliary converter (10) is consistent with any one of claims 13 to 16.

Fig. 1

## 2 / 6

**Fig. 2**

**Fig. 3**

**Fig. 4**

**Fig. 5**

**Fig. 6**

24

Amplitude (A)

454

# Fig. 7

0
50  1050                                                   (Hz)

120 Vdc

t

43,7
Vdc

# Fig. 8

Amplitude (V)

# Fig. 9

0
     1050   2100   3150                                     (Hz)

**Fig. 10**

Amplitude (A)

**Fig. 11**

0  50        3450        (Hz)

**Fig. 12**

Amplitude (v)

**Fig. 13**

0          3450          6900          (Hz)

**Fig. 14**

482
A

**Fig. 15**

2,55
Vdc

120
Vdc

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20007159858 A1

**Littérature non-brevet citée dans la description**

- **CHUANHONG ZHAO ; KOLAR J W.** A novel three-phase three-port UPS employing a single high-frequency isolation transformer. *IEEE 35th Annual Power Electronics Specialists Conférence,* 20 Juin 2004

- **J. RODRIGUEZ.** PWM Regenerative Rectifiers : state of the Art. *IEEE*